# EUROPEAN PATENT SPECIFICATION

(11) **EP 2 482 151 B1**
(45) Date of publication and mention of the grant of the patent: **06.05.2020**
(21) Application number: 12152107.4
(22) Date of filing: 23.01.2012
(51) Int. Cl.: G05B 19/042

(54) **Method and device for improving electrical installations**
Verfahren und Vorrichtung zur verbesserten Installation
Procédé et appareil pour améliorer des installations éléctriques

(30) Priority: 28.01.2011 BE 201100049
(43) Date of publication of application: 01.08.2012
(73) Proprietor: Niko NV, 9100 Sint-Niklaas (BE)
(72) Inventor: Daniels, Mieke, 2200 Herentals (BE); Denul, Jurgen, 9800 Deinze (BE); Leroy, Pascal, 9921 Vinderhoute (BE); Plas, Jurgen, 9800 Deinze (BE); Vehent, Peter, 9160 Lokeren (BE)
(74) Representative: D'Halleweyn, Nele Veerle Trees Gertrudis

(56) References cited:
- US-A1- 2007 219 645

## Description

In recent years, electrical installations have become increasingly complex, among others because of the introduction of software-controlled automation elements in buildings such as houses or industrial buildings and spaces.

Research has shown that families and businesses demand new functions in their electrical system: from functions that increase their sense of security to, for example, presence simulation, energy saving features, to features that make it easier to operate devices, for example by means of a central control unit with a touch screen.

Systems already exist wherein the user can easily centrally operate lighting, heating, ventilation, blinds, .... It was often found in the prior art systems that many engineers were reluctant to offer the wide range of available functions, and that they show a relatively poor creativity. Hence, the many intrinsic functionalities of these systems were not used and the relatively expensive components did not provide a significant improvement over conventional electrical systems, making automation systems or home automation systems in the past appear as expensive and superfluous.

US 2007/0219645 describes a building management system wherein a 3D model of an actual building is provided to a user so that various devices in the building can be monitored.

It is an object of the present invention to provide a device according to claim 1 and a method according to claim 10, which lowers the threshold for the installer and the end customer even more, which in practice is expected to lead to more complex automation or home automation systems, which better meets the expectations of the residents or users of a building.

By the present invention, certain actions of certain elements of the automation or home automation system can be controlled as a function of certain incoming triggers or input. Also, the user himself is able to slightly change or manipulate instantaneously the conditions of the inputs to instantly determine and assess the result or the difference. This allows the user to try out various options, simulate, visualize for the end user, before the actual installation is done.

In a first aspect of the present invention, a device is described for simulating the operation of at least one input unit and/or at least one output unit in a building, comprising
- a planning unit arranged to store model information comprising a virtual representation of the building, input-specification information concerning at least one input unit, output-specification information concerning at least one output unit, wherein the respective specification information comprises location information for the at least one input unit and the at least one output unit;
- one or more storage units arranged to store action information about at least one action to be executed by the at least one output unit, wherein this action is based on at least one of an input of the at least one input unit and associated predetermined conditions;
- an imaging unit arranged to display a graphical representation of the building, based on the model information, as well as of the at least one set of associated input and output units, based on the input- and output-specification information,
wherein the device further comprises a simulation unit arranged to simulate the execution of at least one action; and the imaging unit is arranged to graphically display the results of this simulation.

In preferred embodiments, input-specification information comprises information indicating which mode the respective input unit may be in.

In preferred embodiments, the output-specification information indicates which modes the respective output units may be in.

In preferred embodiments, the input units comprise switches or sensors.

The sensors may be, for example a temperature sensor, or a light sensor, or an (air) humidity sensor, rain sensor, air pressure sensor, a motion sensor or a sensor which is able to detect specific states of a functional electrical unit (for example the status of a solar blind which can be set electrically in different positions, or an on/off status of a simple electrical switch). Other sensors are also possible, as the person skilled in the art will recognize. The measurement information or sensor information is respectively temperature information, light information, (air) humidity information, rain sensor information, air pressure information, presence information, status information, which can be part of the input-specification information.

The model information, for example, the floor plan of a building can be put on the planning unit by a user according to methods known in the state of the art.

In preferred embodiments of the present invention, as a constraint it is assumed that the status of the output units is determined at least partially, but preferably entirely by the electrical current received by the respective output unit. This, because in typical automation or home automation the input units are adapted to communicate with a central control unit, for example over a data bus, but optionally also wireless, and the output units are typically at least partially, and sometimes only controllable by the power supply to the appropriate output control units, by means of the same control unit, which can suitably communicate with appropriate modules which provide the power supply to the appropriate output units. Of course, it is also possible for the input units to communicate with control units that are distributed throughout the system, wherein the communication is not centralized, but can take place throughout the system.

In preferred embodiments, the output units comprise fans, light generating units, such as lamps, engines, monitors, being both TV screens as well as touch screens which, at least in the last example, take on a dual role of both input unit and output unit.

In preferred embodiments, the simulation unit is arranged to simulate at least one action to be executed by selecting one of the possible inputs of the respective input units, to select the respective predetermined conditions, and to generate and visualize the corresponding outputs.

Simulating the at least one action, in other words mimicking an action in a given context, preferably concerns mimicking an action which, in corresponding conditions, would be executed by the at least one output unit, according to the configuration of the respective system, entered by the installer.

In preferred embodiments, the device further comprises a human-machine interface unit arranged to allow a user to select at least one of a selection of inputs of the respective input units and predetermined conditions, for which the outputs are generated.

In preferred embodiments, the device further comprises one or more storage means arranged to comprise, for at least one of the input units and/or at least one of the output units, information that allows a graphical representation of the at least one input unit and/or at least one output unit for different conditions of use of the at least one input unit and/or at least one output unit (for example on/off for a light source or for a fan).

In preferred embodiments, respective associated predetermined conditions comprise time conditions. Hence, an action may be defined which may control an output unit such as a thermostatic valve as function of the time of day, without not necessarily being triggered by a (signal of) a particular input unit. Also, actions can be defined that can only be triggered by an input from an input unit, and which comprise no further associated predetermined conditions.

In preferred embodiments, associated predetermined conditions comprise temperature conditions. Thus, an action may be defined which may control an output unit such as a thermostatic valve as function of the temperature of a part of the building, received from an input unit such as a temperature sensor.

In preferred embodiments, the device is arranged to read at least one of model information, input-specification information, output-specification information, action-information and associated predetermined conditions of a control unit of a home automation system or automation system in a building. This allows an installer to easily recover at least part of the necessary information, on its device - for example his laptop computer -, to enable simulating the actions.

A second aspect of the present invention relates to a method for simulating the operation of at least one input unit and/or at least one output unit in a building, comprising
- storing model information comprising a virtual representation of the building, input-specification information concerning at least one input unit and output-specification information concerning at least one output unit, wherein the respective specification information comprises location information for the at least one input unit and for the at least one output unit;
- storing action information concerning at least one action to be executed by the at least one output unit, this action being based on at least one of an input of at least one input unit and associated predetermined conditions;
- graphically displaying the building, based on the model information, as well as of the at least one set of associated input and output units, based on the input and output-specification information,
- simulating at least one action; and
- graphically displaying the results of this simulation.

In preferred embodiments, the input-specification information further comprises information indicating which mode the respective input unit may be in.

In preferred embodiments, the output-specification information indicates which modes the respective output units may be in.

In preferred embodiments, it is assumed as a constraint that the status of the output units is partially, but preferably entirely determined by the electrical current received by the respective output unit. In typical automation or home automation systems, the input units are adapted to communicate with one or more control units (central or decentralized), for example over a data bus, but optionally also wireless, and the output units are typically controllable via modules in a control box or decentrally by the power supply to the respective units. These modules in the control box and/or the decentralized modules may also communicate with the same central or decentralized control units. Hence, a status of an input unit is appropriately transmitted via one or more control units to the module connected to an output unit.

In preferred embodiments, simulating the action to be executed comprises:
- selecting one of the inputs of the respective input units,
- selecting predetermined conditions, and
- generating and displaying the corresponding outputs.

The simulation can be done virtually, that is to say, by display on a screen or other graphic display means. Alternatively, a combination of virtual selecting the inputs and in reality generating and displaying, for example by switching on the light, the corresponding outputs are also possible. Because the selection of the virtual conditions also can be chosen virtually, in reality, these conditions do not need to be fulfilled.

In preferred embodiments, the method allows a user to select at least one of a selection of inputs of the respective input units and predetermined conditions, for which the outputs are generated by means of a human-machine interface.

In preferred embodiments, respective associated predetermined conditions comprise time conditions.

In preferred embodiments, respective associated predetermined conditions comprise temperature conditions.

In preferred embodiments, the method comprises reading at least one of model information, input-specification information, output-specification information, action-information and associated predefined conditions of a control unit of a home automation system in a building.

In the third aspect of the present invention, a computer program is described comprising a coding means adapted to execute all steps of an embodiment of the second aspect, when it is run on a computer.

Further aspects of the present invention are described in the dependent claims. The features of the dependent claims, features of one of the dependent claims and one of the features of other dependent claims may be joined and found suitable by the skilled person, and not only in the specific combinations as determined by the claims.

The description of the aspects of the present invention is accomplished by means of specific embodiments and with reference to certain drawings, but is not limited to thereto. The depicted figures are merely schematic and should not be considered as restrictive. Reference symbols are chosen such that they are identical for similar or identical elements or features in various figures and drawings.

In the description of certain embodiments according to the present invention, different features are sometimes combined into a single embodiment, figure, or description thereof for the purpose of contributing to the understanding of one or more of several inventive steps. This should not be interpreted as if all features of the group should necessarily be present to solve a specific problem.

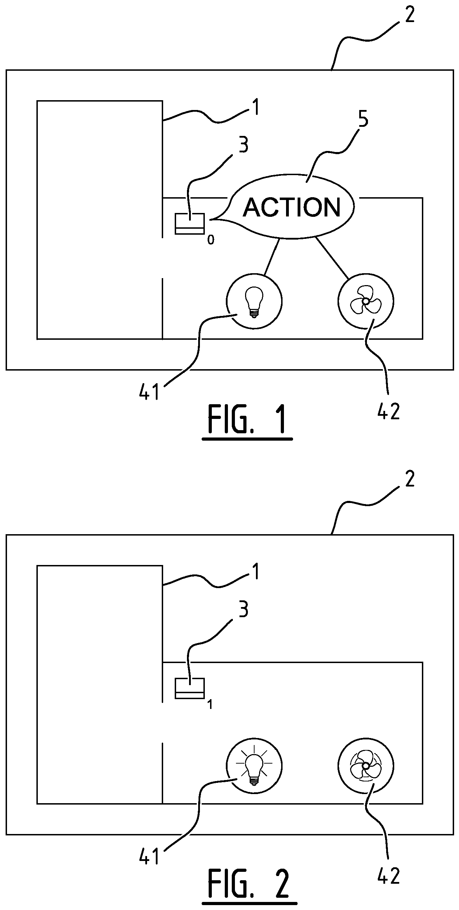

A first example according to embodiments of the present invention is illustrated in Figures 1 and 2.

An installer of an electrical installation, to conduct the programming of the installation, may graphically display, for example on a monitor 2, a virtual model of the building 1. In the proposed figures, this is done by means of a top view of the building, a kind of floor plan. The different input units 3 and output units 41, 42 are shown thereon on locations which are indicative for their actual location in the building. In the example given, a single input unit 3, in the form of a switch, is coupled with two output units 41 and 42, corresponding to a lamp and a fan, respectively. This corresponds, for example, with an actual situation wherein a switch should be programmed in such a way that it is switched on when "switching on" (bringing it in the first "on" state) the switch (the second state is the "off" position), both the fan and the lamp in the same room (for example bathroom).

Furthermore, it is also possible that a corresponding action is selected by the user and that only the elements participating to that specific action, for example the relevant input units and/or associated predetermined conditions, and output units are or can be graphically represented by a suitable interaction between the installer or user and the device. The selection may occur by means of a keyboard and/or mouse interface. In this way, one can only display a "subgroup", being a selection of input units and/or conditions and/or output units, corresponding to a certain action.

In Fig. 2 is further illustrated what the installer gets to see when properly indicating, typically by using the same human-machine interface, that he likes to see a simulation result of a programmed action. For this purpose, the user can specify, for example using a menu system, or an input field or click field on the screen, what action he likes to see simulated. Furthermore, the installer has, for example, the possibility, by clicking on the image (type icon) of the switch 3 in a state corresponding to Fig. 1, to switch the status of the switch "0" into a status "1" of Fig. 2. Subsequently, automatically or on explicit further instruction from the user, a simulation of the effects of these inputs may be simulated. The user can follow the result on the screen, in this case because the icons/information corresponding to the respective first states of the lamp and fan (Fig. 1) are replaced by icons/information corresponding to the respective second states of the lamp and fan. Even more dynamic effects, like animations, can be incorporated into the display of the simulated results. Hence, the installer is immediately informed of the correct execution of the action and he can immediately correct the associated action, if the second state of the lamp and/or fan does not correspond to the state he has in mind. Note that, since the associated predetermined conditions may be selected virtually, the installer may also test the operation of the corresponding actual system, even when these conditions would not immediately arise in practice. For example, this may be desirable, when a rain sensor has been connected as input unit, wherein rain can be simulated without the rain sensor detecting rain.

The switch communicates in a corresponding actual situation somehow its change in status to a central control unit, for example, over a data bus, data line or other wired connection, or over a wireless interface. The central control unit determines which actions are triggered by this and controls specific modules, which are typically located in the control box, to provide the corresponding output units (fan and light) with electricity and hence, switching them on. Note that the modules may also be arranged to control the electricity in a continuous manner, for example, to adjust the fan speed of a fan or the light intensity of a lamp.

While some embodiments described herein, comprise some, but not other features included in other embodiments, combinations or features of different embodiments are intended to be comprised within the scope of the invention, and to form various embodiments, as would be understood by a skilled person.

While the principles of the invention are described above in connection with specific embodiments, it should be clearly understood that this description is only made by way of example, and is not limiting for the scope of protection, which is defined by the appended claims.

## Claims

1. A device for simulating the operation of at least one input unit and/or at least one output unit in a building, comprising
- a planning unit arranged to store model information comprising a virtual representation of the building, input-specification information concerning at least one input unit, output-specification information concerning at least one output unit, wherein the respective specification information comprises location information for the at least one input unit and the at least one output unit;
- one or more storage units arranged to store action information about at least one action to be executed by the at least one output unit, wherein this action is based on at least one of an input of the at least one input unit and associated predetermined conditions;
- an imaging unit arranged to display a graphical representation of the building, based on the model information, as well as of the at least one set of associated input and output units, based on the input- and output-specification information,
wherein the device further comprises input means provided for a user to specify at least one action to be simulated, and comprises a simulation unit arranged to simulate the execution of at least one action before the actual installation of said at least one unit is done; and the imaging unit is arranged to graphically display the results of this simulation, such that a user is allowed to try out various options, simulate and visualize for an end user, before the actual installation is done.

2. A device according to claim 1, wherein input-specification information further comprises information indicating which mode the respective input unit may be in; and/or wherein the output-specification information indicates which modes the respective output units may be in, wherein the state of the output units is preferably entirely determined by the electric current received by the respective output unit.

3. A device according to any one of the preceding claims, wherein the input units concern switches or sensors.

4. A device according to any one of the preceding claims, wherein the output units concern fans, light generating units, engines or monitors.

5. A device according to any one of the preceding claims, wherein the simulation unit is arranged to simulate at least one action to be executed by selecting one of the possible inputs of the respective input units, to select the respective predetermined conditions, and to generate and visualize the corresponding outputs.

6. A device according to any one of the preceding claims, wherein the device further comprises a human-machine interface unit arranged to allow a user to select at least one of a selection of inputs of the respective input units and predetermined conditions, for which the outputs are generated.

7. A device according to any one of the preceding claims, further comprising one or more storage means arranged to comprise, for at least one of the input units and/or at least one of the output units, information that allows a graphical representation of the at least one input unit and/or at least one output unit for different conditions of use of the at least one input unit and/or at least one output unit.

8. A device according to any one of the preceding claims, wherein respective associated predetermined conditions comprise time conditions and/or temperature conditions.

9. A device according to any one of the preceding claims, arranged to read at least one of model information, input-specification information, output-specification information, action-information and associated predetermined conditions of a control unit of a home automation system in a building.

10. A method for configuring the operation of at least one input unit and/or at least one output unit in a building, comprising
- storing model information comprising a virtual representation of the building, input-specification information concerning at least one input unit and output-specification information concerning at least one output unit, wherein the respective specification information comprises location information for the at least one input unit and for the at least one output unit;
- storing action information concerning at least one action to be executed by the at least one output unit, this action being based on at least one of an input of at least one input unit and associated predetermined conditions;
- graphically displaying the building, based on the model information, as well as of the at least one set of associated input and output units, based on the input and output-specification information,
- specifying via input means at least one action to be simulated,
- selecting said associated predetermined conditions,
- simulating at least one action before the actual installation is done; and
- graphically displaying the results of this virtual simulation;
such that a user is allowed to try out various options, simulate and visualize for an end user, before the actual installation of said at least one unit is done.

11. A method according to claim 10, wherein input-specification information further comprises information indicating which mode the respective input unit may be in; and/or wherein the output-specification information indicates which modes the respective output units may be in, whereby the status of the output unit is preferably entirely determined by the electrical current received by the respective output unit.

12. A method according to claims 10 or 11, wherein simulating the action to be executed comprises:
- selecting one of the inputs of the respective input units,
- selecting predetermined conditions, and
- generating and displaying the corresponding outputs.

13. A method according to any one of preceding claims 10-12, wherein respective associated predetermined conditions comprise time conditions and/or temperature conditions.

14. A method according to any one of claims 10-13, comprising reading at least one of model information, input-specification information, output-specification information, action-information and associated predefined conditions of one or more control unit of an automation system, for example a home automation system, in a building, wherein the one or more control units are preferably grouped into the automation system or distributed throughout the automation system.

15. A computer program comprising a computer program code means adapted to execute the steps of any one of the claims 10 to 14 when the program is run on a computer.

## Patentansprüche

1. Vorrichtung zur Simulation des Betriebs von mindestens einer Eingangseinheit und/oder mindestens einer Ausgangseinheit in einem Gebäude, umfassend:
- eine Planungseinheit, die angeordnet ist, um Modellinformationen zu speichern, die eine virtuelle Darstellung des Gebäudes, Eingangsspezifikationsinformationen, die mindestens eine Eingangseinheit betreffen, und Ausgangsspezifikationsinformationen, die mindestens eine Ausgangseinheit betreffen, umfassen, wobei die jeweiligen Spezifikationsinformationen Standortinformationen für die mindestens eine Eingangseinheit und die mindestens eine Ausgangseinheit umfassen;
- eine oder mehrere Speichereinheiten, die so angeordnet sind, dass sie Aktionsinformationen über mindestens eine, von der mindestens einen Ausgangseinheit auszuführende Aktion speichern, wobei diese Aktion auf mindestens einem Eingang der mindestens einen Eingangseinheit und zugehörigen vorbestimmten Bedingungen basiert;
- eine Bildgebungseinheit, die so angeordnet ist, dass sie eine graphische Darstellung des Gebäudes, basierend auf den Modellinformationen, sowie der mindestens einen Gruppe zugehöriger Eingangs- und Ausgangseinheiten, basierend auf den Eingangs- und Ausgangsspezifikationsinformationen, anzeigt,
wobei die Vorrichtung ferner Eingabemittel umfasst, die für einen Benutzer vorgesehen sind, um mindestens eine zu simulierende Aktion zu spezifizieren, und ferner eine Simulationseinheit umfasst, die so angeordnet ist, dass sie die Ausführung mindestens einer Aktion simuliert, bevor die tatsächliche Installation der mindestens einen Einheit durchgeführt wird; und wobei die Bildgebungseinheit so angeordnet ist, dass sie die Ergebnisse dieser Simulation graphisch anzeigt, so dass ein Benutzer verschiedene Optionen ausprobieren, simulieren und für einen Endbenutzer sichtbar machen kann, bevor die tatsächliche Installation durchgeführt wird.

2. Vorrichtung nach Anspruch 1, wobei die Eingangsspezifikationsinformation ferner Informationen umfasst, die angeben, in welchem Modus sich die jeweilige Eingangseinheit befinden kann; und/oder wobei die Ausgangsspezifikationsinformation angibt, in welchen Modi sich die jeweiligen Ausgangseinheiten befinden können, wobei der Status der Ausgangseinheiten vorzugsweise vollständig durch den von der jeweiligen Ausgangseinheit empfangenen elektrischen Strom bestimmt wird.

3. Vorrichtung nach einem der vorstehenden Ansprüche, wobei die Eingangseinheiten Schalter oder Sensoren betreffen.

4. Vorrichtung nach einem der vorhergehenden Ansprüche, wobei die Ausgangseinheiten Ventilatoren, Lichterzeugungseinheiten, Motoren oder Monitore betreffen.

5. Vorrichtung nach einem der vorhergehenden Ansprüche, wobei die Simulationseinheit so angeordnet ist, dass sie mindestens eine auszuführende Aktion simuliert, indem sie einen der möglichen Eingänge der jeweiligen Eingangseinheiten auswählt, um die jeweiligen vorgegebenen Bedingungen auszuwählen, und um die entsprechenden Ausgänge zu erzeugen und darzustellen.

6. Vorrichtung nach einem der vorstehenden Ansprüche, wobei die Vorrichtung ferner eine Mensch-Maschine-Schnittstelleneinheit umfasst, die so angeordnet ist, dass ein Benutzer mindestens eine aus einer Auswahl von Eingängen der jeweiligen Eingangseinheiten und vorbestimmten Bedingungen, für die die Ausgänge erzeugt werden, auswählen kann.

7. Vorrichtung nach einem der vorstehenden Ansprüche, ferner umfassend ein oder mehrere Speichermittel, die so angeordnet sind, dass sie für mindestens eine der Eingangseinheiten und/oder mindestens eine der Ausgangseinheiten Informationen enthalten, die eine graphische Darstellung der mindestens einen Eingangseinheit und/oder mindestens einen Ausgangseinheit für verschiedene Verwendungsbedingungen der mindestens einen Eingangseinheit und/oder mindestens einen Ausgangseinheit ermöglichen.

8. Vorrichtung nach einem der vorhergehenden Ansprüche, wobei die jeweils zugeordneten vorbestimmten Bedingungen Zeitbedingungen und/oder Temperaturbedingungen umfassen.

9. Vorrichtung nach einem der vorhergehenden Ansprüche, die so angeordnet ist, dass sie mindestens eine der folgenden Informationen ausliest: Modellinformation, Eingangsinformation, Ausgangsinformation, Aktions-Information sowie zugehörige vorbestimmte Bedingungen einer Steuereinheit eines Hausautomatisierungssystems in einem Gebäude.

10. Verfahren zum Konfigurieren des Betriebs von mindestens einer Eingangseinheit und/oder mindestens einer Ausgangseinheit in einem Gebäude, Folgendes umfassend:
- Speichern von Modellinformationen, die eine virtuelle Darstellung des Gebäudes, Eingangsspezifikationsinformationen bezüglich mindestens einer Eingangseinheit und Ausgangsspezifikationsinformationen bezüglich mindestens einer Ausgangseinheiten umfassen, wobei die jeweiligen Spezifikationsinformationen Standortinformationen für die mindestens eine Eingangseinheit und für die mindestens eine Ausgangseinheit umfassen;
- Speichern von Aktionsinformationen bezüglich mindestens einer der von der mindestens einen Ausgangseinheit auszuführenden Aktion, wobei diese Aktion auf mindestens einem Eingang von mindestens einer Eingangseinheit und damit verbundenen vorbestimmten Bedingungen basiert;
- graphisches Darstellen des Gebäudes, basierend auf den Modellinformationen, sowie der mindestens einen Gruppe zugehöriger Eingangs- und Ausgangseinheiten, basierend auf den Eingangs- und Ausgangsspezifikationsinformationen,
- Spezifizieren über die Eingabemittel bedeutet mindestens eine zu simulierende Aktion,
- Auswählen der genannten zugehörigen vorgegebenen Bedingungen,
- Simulieren von mindestens einer Aktion, bevor die eigentliche Installation erfolgt; und
- graphische Darstellung der Ergebnisse dieser virtuellen Simulation;
so dass ein Benutzer verschiedene Optionen ausprobieren, simulieren und für einen Endbenutzer darstellen kann, bevor die tatsächliche Installation der mindestens einen Einheit durchgeführt wird.

11. Verfahren nach Anspruch 10, wobei die Eingangsspezifikationsinformation ferner Informationen umfasst, die angeben, in welchem Modus sich die jeweilige Eingangseinheit befinden kann; und/oder wobei die Ausgangsspezifikationsinformation angibt, in welchen Modi sich die jeweiligen Ausgangseinheiten befinden können, wobei der Status der Ausgangseinheit vorzugsweise vollständig durch den von der jeweiligen Ausgangseinheit empfangenen elektrischen Strom bestimmt wird.

12. Verfahren nach Anspruch 10 oder 11, wobei das Simulieren der auszuführenden Aktion Folgendes umfasst:
- Auswählen eines der Eingänge der jeweiligen Eingangseinheiten,
- Auswählen vorbestimmter Bedingungen, und
- Erzeugen und Anzeigen der entsprechenden Ausgänge.

13. Verfahren nach einem der vorhergehenden Ansprüche 10 bis 12, wobei die jeweils zugehörigen vorbestimmten Bedingungen Zeitbedingungen und/oder Temperaturbedingungen umfassen.

14. Verfahren nach einem der Ansprüche 10 bis 13, umfassend das Auslesen von mindestens einer der folgenden Informationen: Modellinformation, Eingangsspezifikationsinformation, Ausgangsspezifikationsinformation, Aktionsinformation und zugehöriger vordefinierter Bedingungen einer oder mehrerer Steuereinheiten eines Automatisierungssystems, beispielsweise eines Hausautomatisierungssystems, in einem Gebäude, wobei die eine oder die mehreren Steuereinheiten vorzugsweise in dem Automatisierungssystem gruppiert oder über das gesamte Automatisierungssystem verteilt sind.

15. Computerprogramm mit einer Computerprogramm-Code-Vorrichtung, die geeignet ist, die Schritte eines der Ansprüche 10 bis 14 auszuführen, wenn das Programm auf einem Computer ausgeführt wird.

## Revendications

1. Dispositif permettant de simuler le fonctionnement d'au moins une unité d'entrée et/ou d'au moins une unité de sortie dans un bâtiment, comprenant
- une unité de planification agencée pour stocker des informations de modèle comprenant une représentation virtuelle du bâtiment, des informations de spécification d'entrée concernant au moins une unité d'entrée, des informations de spécification de sortie concernant au moins une unité de sortie, dans lequel les informations de spécification respectives comprennent des informations de localisation pour l'au moins une unité d'entrée et l'au moins une unité de sortie ;
- une ou plusieurs unités de stockage agencées pour stocker des informations d'action concernant au moins une action à exécuter par l'au moins une unité de sortie, dans lequel cette action est basée sur au moins l'une entrée de l'au moins une unité d'entrée et des conditions associées prédéterminées ;
- une unité d'imagerie agencée pour afficher une représentation graphique du bâtiment, sur la base des informations de modèle, ainsi que de l'au moins un ensemble d'unités d'entrée et de sortie associées, sur la base des informations de spécification d'entrée et de sortie,
dans lequel le dispositif comprend en outre des moyens d'entrée prévus pour qu'un utilisateur spécifie au moins une action à simuler, et comprend une unité de simulation agencée pour simuler l'exécution d'au moins une action avant que l'installation réelle de ladite au moins une unité ne soit effectuée ; et l'unité d'imagerie est agencée pour afficher graphiquement les résultats de cette simulation, de telle sorte qu'un utilisateur est autorisé à essayer diverses options, à simuler et à visualiser pour un utilisateur final, avant que l'installation réelle ne soit effectuée.

2. Dispositif selon la revendication 1, dans lequel les informations de spécification d'entrée comprennent en outre des informations indiquant dans quel mode l'unité d'entrée respective peut se trouver ; et/ou dans lequel les informations de spécification de sortie indiquent dans quels modes les unités de sortie respectives peuvent se trouver, dans lequel l'état des unités de sortie est de préférence entièrement déterminé par le courant électrique reçu par l'unité de sortie respective.

3. Dispositif selon l'une quelconque des revendications précédentes, dans lequel les unités d'entrée concernent des interrupteurs ou capteurs.

4. Dispositif selon l'une quelconque des revendications précédentes, dans lequel les unités de sortie concernent des ventilateurs, des unités de génération de lumière, des moteurs ou des moniteurs.

5. Dispositif selon l'une quelconque des revendications précédentes, dans lequel l'unité de simulation est agencée pour simuler au moins une action à exécuter en sélectionnant l'une des entrées possibles des unités d'entrée respectives, pour sélectionner les conditions prédéterminées respectives, et pour générer et visualiser les sorties correspondantes.

6. Dispositif selon l'une quelconque des revendications précédentes, dans lequel le dispositif comprend en outre une unité d'interface homme-machine agencée pour permettre à un utilisateur de sélectionner au moins une entrée parmi une sélection d'entrées des unités d'entrée respectives et des conditions prédéterminées, pour lesquelles les sorties sont générées.

7. Dispositif selon l'une quelconque des revendications précédentes, comprenant en outre un ou plusieurs moyens de stockage agencés pour comprendre, pour au moins une des unités d'entrée et/ou au moins une des unités de sortie, des informations qui permettent une représentation graphique de l'au moins une unité d'entrée et/ou au moins une unité de sortie pour différentes conditions d'utilisation de l'au moins une unité d'entrée et/ou au moins une unité de sortie.

8. Dispositif selon l'une quelconque des revendications précédentes, dans lequel les conditions prédéterminées associées respectives comprennent des conditions de temps et/ou des conditions de température.

9. Dispositif selon l'une quelconque des revendications précédentes, agencé pour lire des informations de modèle, et/ou des informations de spécification d'entrée, et/ou des informations de spécification de sortie, et/ou des informations d'action et/ou des conditions prédéterminées associées d'une unité de commande d'un système domotique dans un bâtiment.

10. Procédé de configuration du fonctionnement d'au moins une unité d'entrée et/ou d'au moins une unité de sortie dans un bâtiment, comprenant
- le stockage des informations de modèle comprenant une représentation virtuelle du bâtiment, des informations de spécification d'entrée concernant au moins une unité d'entrée et des informations de spécification de sortie concernant au moins une unité de sortie, les informations de spécification respectives comprenant des informations de localisation pour l'au moins une unité d'entrée et pour l'au moins une unité de sortie ;
- le stockage des informations d'action concernant au moins une action à exécuter par l'au moins une unité de sortie, cette action étant basée sur au moins l'une d'une entrée d'au moins une unité d'entrée et des conditions prédéterminées associées ;
- l'affichage graphique du bâtiment, sur la base des informations de modèle, ainsi que de l'au moins un ensemble d'unités d'entrée et de sortie associées, sur la base des informations de spécification d'entrée et de sortie,
- la spécification d'au moins une action à simuler par le biais de moyens d'entrée,
- la sélection desdites conditions prédéterminées associées,
- la simulation d'au moins une action avant que l'installation réelle ne soit effectuée ; et
- l'affichage graphique des résultats de cette simulation virtuelle ;
de telle sorte qu'un utilisateur est autorisé à essayer diverses options, à simuler et à visualiser pour un utilisateur final, avant que l'installation réelle de ladite au moins une unité ne soit effectuée.

11. Procédé selon la revendication 10, dans lequel les informations de spécification d'entrée comprennent en outre des informations indiquant dans quel mode l'unité d'entrée respective peut se trouver ; et/ou dans lequel les informations de spécification de sortie indiquent dans quels modes les unités de sortie respectives peuvent se trouver, l'état de l'unité de sortie étant de préférence entièrement déterminé par le courant électrique reçu par l'unité de sortie respective.

12. Procédé selon les revendications 10 ou 11, dans lequel la simulation de l'action à exécuter comprend :
- la sélection d'une des entrées des unités d'entrée respectives,
- la sélection des conditions prédéterminées, et
- la génération et l'affichage des sorties correspondantes.

13. Procédé selon l'une quelconque des revendications 10 à 12 précédentes, dans lequel les conditions prédéterminées associées respectives comprennent des conditions de temps et/ou des conditions de température.

14. Procédé selon l'une quelconque des revendications 10 à 13, comprenant la lecture d'informations de modèle, et/ou d'informations de spécification d'entrée, et/ou d'informations de spécification de sortie, et/ou d'informations d'action et/ou de conditions prédéfinies associées d'une ou plusieurs unités de commande d'un système d'automatisation, par exemple un système domotique dans un bâtiment, dans lequel la ou les unités de commande sont de préférence regroupées dans le système d'automatisation ou réparties dans tout le système d'automatisation.

15. Programme informatique comprenant un moyen de code de programme informatique adapté pour exécuter les étapes selon l'une quelconque des revendications 10 à 14 lorsque le programme est exécuté sur un ordinateur.
